# EUROPÄISCHE PATENTSCHRIFT

(11) **EP 1 732 424 B1**
(45) Veröffentlichungstag und Bekanntmachung des Hinweises auf die Patenterteilung: **23.11.2011**
(21) Anmeldenummer: 05717156.3
(22) Anmeldetag: 29.03.2005
(51) Int. Cl.: A47J 37/12

(54) **ELEKTRISCHES HAUSHALTGERÄT**
ELECTRIC HOUSEHOLD APPLIANCE
APPAREIL ELECTROMENAGER

(30) Priorität: 29.03.2004 ES 200400833
(43) Veröffentlichungstag der Anmeldung: 20.12.2006
(73) Patentinhaber: BSH Bosch und Siemens Hausgeräte GmbH, 81739 München (DE)
(72) Erfinder: BELZA IGOA, Ignacio, E-31820 Etxarri-Aranatz (ES); LETE ALDASORO, Juan Manuel, E-31820 Etxarri-Aranaz (ES)
(86) Internationale Anmeldenummer: PCT/EP2005/051416
(87) Internationale Veröffentlichungsnummer: WO 2005/092164

(56) Entgegenhaltungen:
- EP-A- 0 815 786
- US-A- 4 574 185

## Beschreibung

Die Erfindung betrifft ein elektrisches Haushaltgerät, insbesondere eine Fritteuse, mit einem Frittierbehälter zur Aufnahme der Frittierflüssigkeit, zum Beispiel Öl zum Frittieren, einem elektrischen Heizelement zum Erhitzen der Frittierflüssigkeit und einem Einstellungssystem zur Temperatureinstellung der Frittierflüssigkeit, das für das Heizelement in einem Stromkreis angeordnet ist.

Durch das Patent EP 0 815 786 B1 ist eine Fritteuse dieser Art bekannt. Die Fritteuse weist einen Frittierbehälter zur Aufnahme der Frittierflüssigkeit auf, sowie ein elektrisches Heizelement zum Heizen der Frittierflüssigkeit, das unter dem Boden des Frittierbehälters angeordnet ist. In Reihe mit dem Heizelement ist ein Temperatureinstellungssystem angeschlossen. Das Temperatureinstellungssystem weist einen Temperatursensor auf, der mit dem Boden des Frittierbehälters im Kontakt ist und der an einen Thermostatregelschalter angeschlossen ist. Der Temperatursensor kann mit einer geringen Wärmeleitträgheit ausgeführt sein. Auf diese Weise kann das Einstellungssystem fast ohne Zeitverzögerung auf die Temperaturveränderungen der Frittierflüssigkeit reagieren, indem es mit einer erhöhten Ansprechempfindlichkeit arbeitet. Aus diesem Grund erreicht man bei der Temperatureinstellung eine sehr hohe Einstellungsqualität, bei der die Temperaturschwankungen der Frittierflüssigkeit gesenkt werden.

Die US 4,574,185 offenbart ein Frittiergerät mit einem Ölbehälter, einem Korb zum Aufnehmen des Frittierguts, und einem eingetauchten Heizkörper, welcher vom einem Thermostat gesteuert wird, der den Heizkörper abschaltet, wenn das Öl eine vorbestimmte Temperatur erreicht sowie mit einer Einrichtung zur Verminderung des durch die Ansprechzeit des Termostanten bedingten Temperaturabfalls beim Eintauchen des Korbes.

Die EP 0 815 786 A1 offenbart ein Haushaltsfrittiergerät bei dem ein thermostatischer Sicherheitsschalter eine geringere Wärmeträgheit als die der Wärmeregelvorrichtung aufweist, so daß er die Stromversorgung des elektrischen Heizwiderstandes unterbricht, falls kein Frittierbad oder falls eine ungenügende Menge des Frittierbades im Topf vorhanden ist.

Aufgabe der Erfindung ist ein elektrisches Haushaltgerät, insbesondere eine Fritteuse, zur Verfügung zu stellen, bei der die Temperatureinstellung in einfacher Form verbessert wird.

Diese Aufgabe wird erfindungsgemäss durch ein elektrisches Haushaltgerät, insbesondere einer Fritteuse nach Anspruch 1 gelöst, das einen Frittierbehälter zur Aufnahme der Frittierflüssigkeit, beispielsweise Öl zum Frittieren, ein elektrisches Heizelement zum Erhitzen der Frittierflüssigkeit und ein Einstellungssystem zur Temperatureinstellung der Frittierflüssigkeit, aufweist, das in einem Stromkreis für das des Frittierbehälters sofort auf die Temperaturänderungen des Heizelementes und besonders dann, wenn eine geringe Menge an Frittierflüssigkeit vorliegt. Beim Einschalten des Heizelementes erhöht sich die Temperatur der Frittierflüssigkeit sehr schnell. Und ebenso im umgekehrten Fall, beim Ausschalten des Heizelementes, verringert sich die Temperatur der Frittierflüssigkeit sehr schnell.

Wenn der Stromkreis durch das Einstellungssystem unterbrochen ist, erlaubt das Widerstandselement eine Stromzuführung zum Heizelement von bis zu 10% der Nennleistung des Heizelementes.

Bei einer erfindungsgemässen Ausführung ist das Einstellungssystem ein Thermostat. Das Thermostat stellt eine kostengünstige Variante für das Temperatureinstellungssystem dar. Das Thermostat weist einen Thermostatschalter auf, der in Abhängigkeit von der Temperatur, die von der bedienenden Person eingestellt wurde, den Stromkreis unterbricht und schliesst.

Es kann auch sein, dass das elektrische Haushaltgerät mit einem Schutzelement ausgestattet ist, das beim Überschreiten einer Temperaturgrenze die Stromzuführung zum Heizelement unterbricht. Das Sicherungselement wird bei etwa 400°C Temperatur aktiviert. Diese Grenztemperatur wird erreicht, wenn der Frittierbehälter wenig Frittierflüssigkeit enthält oder wenn gar keine Flüssigkeit vorliegt

Bei einer bevorzugten Anwendung der Erfindung ist der Frittierbehälter aus Tiefziehblech, insbesondere mit einer dünnen Wandstärke, gefertigt.

Und das Schutzelement ist, beispielsweise, eine Thermosicherung.

Im Folgenden werden erfindungsgemässe Ausführungsbeispiele beschrieben, bei denen man sich auf die Zeichnung bezieht. Die Figuren zeigen:

Figur 1

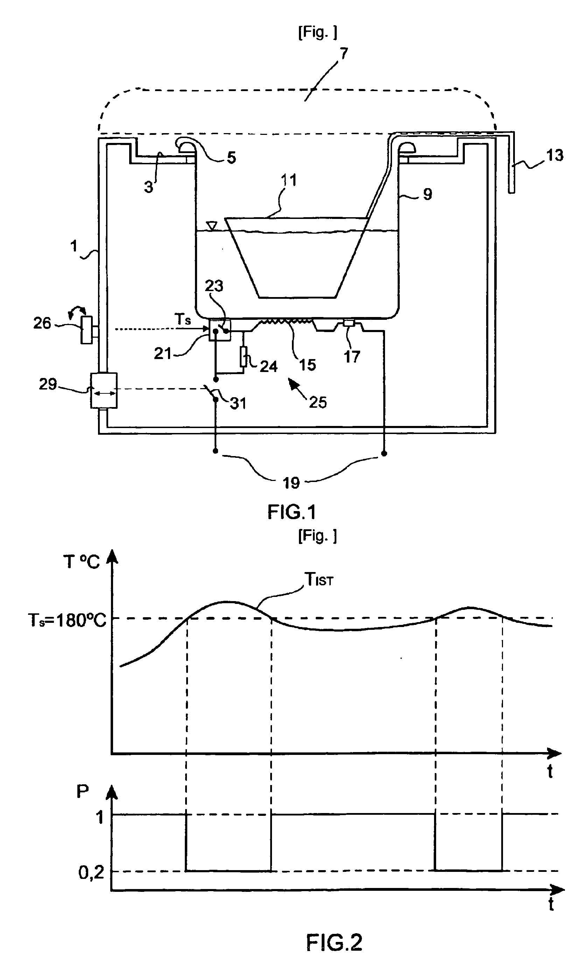

Figur 2 zeigt die Temperaturänderung Tᵢₛₜ der Frittierflüssigkeit in Abhängigkeit von der Zeit an, sowie die Änderung der Heizstromstärke im Verlaufe der Zeit.

Wenn das Einstellungssystem 21 den Stromkreis 25 unterbricht, und zwar, wenn die Stromzufuhr zum Heizelement 15 unterbrochen ist, kann dem Heizelement, dank des parallel geschalteten Widerstandselementes 24, trotzdem eine geringe Stromstärke zugeführt werden.

Dem Heizelement 15 wird erfindungsgemäss eine geringe Menge elektrische Energie zugeführt (mit geschlossenem Schalter 31), selbst in dem Fall, in dem ein Stromkreis vom Einstellungssystem unterbrochen wurde. Auf diese Weise wird erreicht, dass bei geöffnetem Schalter 23 des Einstellungssystems 21, die Temperatur der Frittierflüssigkeit langsamer reduziert wird. Da sich die Temperatur der Frittierflüssigkeit langsamer reduziert, kann die Temperaturschwankung bei der Temperatureinstellung der Frittierflüssigkeit Tᵢₛₜ entsprechend reduziert werden. Das erweist sich als vorteilhaft, wenn ein Einstellungssystem verwendet wird, das eine Wärmeleitträgheit aufweist und dieses Einstellungssystem also ausreichend Zeit hat, um den Temperaturschwankungen der Frittierflüssigkeit zu folgen. Auf diese Weise ist es möglich, eine genauere Messung durchzuführen.

Wenn der Wärmeschalter 23 des Einstellungssystems 21 geöffnet ist, dann sinkt die Temperatur Tᵢₛₜ der Frittierflüssigkeit erfindungsgemäss nicht plötzlich ab, sondern, aufgrund der reduzierten Stromzuführung zum Heizelement 15, mit Zeitverzögerung. Aufgrund der verzögerten Reduzierung der Temperatur Tᵢₛₜ der Frittierflüssigkeit wird nur der Einsatz eines Einstellungssystems benötigt, das eine höhere Wärmeleitträgheit aufweist. Ein solches Einstellungssystem ist wesentlich kostengünstiger.

Gemäss Temperaturdiagramm der Figur 2 wurde mittels Steuerknopf 27 eine Solltemperatur Ts von 180°C eingestellt. Falls die Istzeit der Frittierflüssigkeit 12 die eingestellte Solltemperatur von 180°C überschreitet, wird der Wärmeschalter 23 geöffnet. Auf diese Weise wird nur eine Stromzuführung von 10-20% der Nennleistung zum Heizelement 15 über das Widerstandselement 24 realisiert. Wenn die Temperatur der Frittierflüssigkeit unter die Solltemperatur abfällt, dann wird der Wärmeschalter 23 geschlossen. Infolgedessen erfolgt eine maximale Stromzuführung zum Heizelement 25. Erfindungsgemäss wird aufgrund des Stromkreises eine Temperaturänderung der Frittierflüssigkeit nach einer gewissen Zeit erreicht, die dem Solltemperaturwert naheliegt und keine wesentlichen Schwankungen aufweist.

Das Thermostat stellt eine kostengünstige Variante für das Temperatureinstellungssystem 21 dar. Das Thermostat weist einen Wärmeschalter 23 auf, der den Stromkreis 25 in Abhängigkeit von der Temperatur T_{s,} die von der bedienenden Person eingestellt worden ist, öffnet und schliesst.

Das Sicherungselement 17 wird bei einer Temperatur von etwa 400°C aktiviert. Diese Grenztemperatur wird erreicht, wenn im Frittierbehälter 9 sehr wenig oder gar keine Flüssigkeit vorliegt.

BEZUGSZEICHENLISTE

1 Gehäuse der Fritteuse

3 Abgestufter Rand

5 Abgekanteter Rand

7 Deckel

9 Frittierbehälter aus Tiefziehblech

11 Behälter des Frittierguts

13 Gehäuse des Frittiergutbehälters

15 Heizelement

17 Schutzelement

19 Elektrischer Anschluss

21 Thermostatregler

23 Wärmeschalter

24 Widerstandselement

25 Stromkreis

26 Steuerknopf zum Einstellen der Solltemperatur Tₛ für den Thermostatregler 21

29 Steuerung des Schalters zum Schliessen des Stromkreises 25 mittels Schalter 31

31 Schalter

## Patentansprüche

1. Elektrisches Haushaltgerät, insbesondere eine Friteuse, mit einem Frittierbehälter (9) zur Aufnahme einer Frittierflüssigkeit (12), zum Beispiel Öl zum Frittieren, einem elektrischen Heizelement (15) zum Erhitzen der Frittierflüssigkeit (12) und einem Einstellungssystem (21) zum Einstellen einer Temperatur (Tᵢₛₜ) der Frittierflüssigkeit (12), das in einem Stromkreis (25) für das Heizelement (15) angeordnet ist, **dadurch gekennzeichnet, dass** der Stromkreis (25) ein Widerstandselement (24) aufweist, das mit dem Einstellungssystem (21) parallel geschaltet ist und eine Stromzufuhr zum Heizelement (15) von bis zu 10% der Nennleistung des Heizelements erlaubt, wenn der Stromkreis (25) vom Einstellungssystem (21) unterbrochen wird.

2. Elektrisches Haushaltgerät nach Anspruch 1, **dadurch gekennzeichnet, dass** das Temperatureinstellungssystem (21) ein Thermostat ist.

3. Elektrisches Haushaltgerät nach einem der vorhergehenden Ansprüche, **dadurch gekennzeichnet, dass** im elektrischen Haushaltgerät ein Schutzelement (17) vorgesehen ist, das beim Überschreiten einer Grenztemperatur die Stromzufuhr zum Heizelement (15) unterbricht.

4. Elektrisches Haushaltgerät nach einem der vorhergehenden Ansprüche, **dadurch gekennzeichnet, dass** der Frittierbehälter (9) aus Tiefziehblech, insbesondere mit einer dünnen Wand, gefertigt ist.

5. Elektrisches Haushaltgerät nach einem der Ansprüche 3 oder 4, **dadurch gekennzeichnet, dass** das Schutzelement (17) eine Thermosicherung ist.

## Claims

1. Electric domestic appliance, particularly a deep-fat fryer, with a deep-fat frying container (9) for receiving a deep-fat frying liquid (12), for example oil for deep-fat frying, an electric heating element (15) for heating the deep-fat frying liquid (12) and a setting system (21) for setting a temperature (Tᵢₛₜ) of the deep-fat frying liquid (12), which is arranged in a circuit (25) for the heating element (15), **characterised in that** the circuit (25) comprises a resistance element (24) which is connected in parallel with the setting system (21) and which allows a power feed to the heating element (15) of up to 10% of the rated power of the heating element when the circuit (25) is interrupted by the setting system (21).

2. Electrical domestic appliance according to claim 1, **characterised in that** the temperature setting system (21) is a thermostat.

3. Electrical domestic appliance according to any one of the preceding claims, **characterised in that** a circuitbreaker (17) is provided in the electric domestic appliance and interrupts the power feed to the heating element (15) if a limit temperature of the power feed is exceeded.

4. Electric domestic appliance according to any one of the preceding claims, **characterised in that** the deep-fat frying container (9) is made from deep-drawn sheet metal, particularly with a thin wall.

5. Electric domestic appliance according to one of claims 3 and 4, **characterised in that** the circuitbreaker (17) is a thermofuse.

## Revendications

1. Appareil électroménager, notamment friteuse, comprenant un récipient à friture (9) destiné à loger un liquide de friture (12), par exemple de l'huile de friture, un élément de chauffage électrique (15) destiné à échauffer le liquide de friture (12) et un système de réglage (21) destiné à régler une température (Tᵢₛₜ) du liquide de friture (12), lequel système de réglage est disposé dans un circuit de courant (25) pour l'élément de chauffage (15), **caractérisé en ce que** le circuit de courant (25) présente un élément de résistance (24) qui est connecté en parallèle avec le système de réglage (21) et permet une alimentation en courant vers l'élément de chauffage (15) allant jusqu'à 10% de la puissance nominale de l'élément de chauffage lorsque le circuit de courant (25) est interrompu par le système de réglage (21).

2. Appareil électroménager selon la revendication 1, **caractérisé en ce que** le système de réglage de température (21) est un thermostat.

3. Appareil électroménager selon l'une quelconque des revendications précédentes, **caractérisé en ce qu'**un élément de protection (17) est ménagé dans l'appareil électroménager, lequel élément de protection, lorsqu'une température limite est dépassée, interrompt l'alimentation en courant vers l'élément de chauffage (15).

4. Appareil électroménager selon l'une quelconque des revendications précédentes, **caractérisé en ce que** le récipient à friture (9) est fabriqué en tôle d'emboutissage, notamment avec une paroi mince.

5. Appareil électroménager selon l'une quelconque des revendications 3 ou 4, **caractérisé en ce que** l'élément de protection (17) est un thermofusible.
